# EUROPÄISCHE PATENTANMELDUNG

(11) **EP 0 971 164 A2**
(43) Veröffentlichungstag der Anmeldung: **12.01.2000**
(21) Anmeldenummer: 99117582.9
(22) Anmeldetag: 06.09.1999
(51) Int. Cl.: F16L 55/05

(54) **Vorrichtung zum Reduzieren von Druckpulsationen in Hydraulikleitungen**

(71) Anmelder: Dobson Industries Corp., Wickhams Cay, Road Town, Tortola (VG)
(72) Erfinder: Kurr, Klaus-Jürgen, Dr., 64832 Babenhausen (DE)
(74) Vertreter: Troesch Scheidegger Werner AG

(57) **Zusammenfassung**

Eine Vorrichtung zum Reduzieren von in einem Hydrauliksystem insbesondere durch eine Pumpe verursachten Druckpulsationen weist ein Ausgleichsvolumen (41) auf mit einer im Volumen angeordneten und das Volumen abschliessenden, verschieblichen Wandung bzw. Membran (39), welche auf einer Seite mit den Pulsationen beaufschlagt ist und an der entgegengesetzten Seite mit einem Gegendruck, welcher wenigstens nahezu dem mittlerem Druck im Hydrauliksystem entspricht. Das an der entgegengesetzten Seite der Wandung bzw. Membran (39) angeordnete Druckausgleichsvolumen (43) ist über eine Ausgleichsleitung (51) mit dem Hydrauliksystem verbunden, wobei die genannte Leitung (51) in Fortpflanzungsrichtung der Pulsationen in bezug auf das Ausgleichsvolumen (41) nachgeschaltet in das Hydrauliksystem mündet.

## Beschreibung

Die vorliegende Erfindung betrifft eine Vorrichtung zum Reduzieren von in einer Hydraulikleitung insbesondere durch eine Pumpe verursachte Druckpulsationen nach dem Oberbegriff von Anspruch 1 sowie eine Servolenkungsanlage eines Kraftfahrzeuges mit der Vorrichtung.

Die Kinematik der in Oelhydraulik-Kreisläufen meist eingesetzten hydrostatischen oder anderen Pumpen sowie die Betätigung von Armaturen, Ventilen und Stelleinrichtungen führt zu Druckschwingungen, die wesentliche Ursache unerwünschter Geräusche in hydraulischen Systemen sind. Weitere Folgen sind u.a. eine erhöhte festigkeitsmässige Beanspruchung der Rohrleitungen, deren Befestigungen sowie der angeschlossenen Verbraucher.

So erfolgt beispielsweise auch die Versorgung der Servolenkung und anderer hydraulischer Verbraucher in Kraftfahrzeugen über hydraulische Verdrängereinheiten. Diese erzeugen aufgrund des diskontinuierlichen Fördervorganges Druck- und Volumenstrompulsationen, die sich über das Hydraulikmedium im Leitungssystem fortpflanzen. Speziell bei Servolenkungen sind diese Pulsationen unerwünscht. Weitere Anregungen können über die Fahrbahn und das Rad in das Lenkgetriebe, beispielsweise in Form von Druckstössen, eingeleitet werden, was Auswirkungen auf die Fahrsicherheit hat.

Eine Vielzahl passiver und aktiver Dämpfer zur Minderung dieser Pulsationen werden eingesetzt, die allerdings sehr sorgfältig auf das System und die Frequenz der zu dämpfenden Pulsationen abgestimmt werden müssen, da diese allenfalls gegenüber dem ungedämpften System sogar noch verstärkt werden können. So werden seit langem zur Minderung von Pulsationen passive Elemente, - wie etwa Membranspeicher - eingesetzt. Aufgrund des grossen Gasvolumens besteht bei diesen allerdings das Problem, dass beim Auftreten eines grossen Pulses dieser vom Membranspeicher 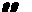 geschluckt" wird und ein Weiterfliessen des Hydraulikmediums kurzfristig unterbrochen wird. Der Membranspeicher stellt damit eine grosse hydraulische Kapazität dar. Die Dämpfung von Pulsationen mit diesen Elementen ist beispielsweise in Lenkungen nicht möglich, da schnelle Druckänderungen beim Lenken vom Speicher 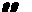 verschluckt" werden. Eine Lösung hierzu besteht beispielsweise durch Begrenzung des Ausschlages der im Speicher angeordneten Membran. Diese Lösung wiederum funktioniert nur, falls die Membran vom statischen Druck entlastet wird.

Eine weitere Lösung stellen sogenannte Dehnschläuche dar, wie beispielsweise in der DE-33 39 876 vorgeschlagen.

Eine wiederum weitere Lösung wird in der GB-2 054 041 vorgeschlagen, in welcher ein sogenannter Kammerresonator für die Aufnahme von Pulsationen vorgeschlagen wird.

Wiederum weitere Lösungen stellen Reflexionsschalldämpfer, Stichleitungen, Speicher in Stichleitungen, durchflossene Speicher dar, wobei der Nachteil bei all den genannten Vorrichtungen darin besteht, dass entweder ein relativ grosses Einbauvolumen notwendig ist, die Dämpfung ungenügend ist oder aber eine hohe Volumenstromaufnahmne bei Druckänderungen erfolgt. Zudem ist oft eine breitbandige Pulsationsminderung mit diesen Dämpfern nicht möglich.

Aus der FR-834 316 ist eine Vorrichtung bekannt, um in Flüssigkeitsdruckleitungen auftretenden Unterdruck und starken Überdruck aufzufangen bzw. auszugleichen. Aus diesem Grunde wird an der Leitung ein Teilstück mit einer gummielastischen Wandung versehen, welche Wandung auf ihrer Rückseite mit einem unter Überdruck stehenden Gas beaufschlagt ist.

Eine ähnliche Anordnung beschreibt die US-4 088 154, in welcher wiederum entlang einer Flüssigkeitsleitung eine längs ausgedehnte und in Kommunikation mit dieser Leitung stehende Ausgleichskammer vorgesehen ist, welche eine elastische Wandung aufweist. Diese Ausgleichskammer selbst ist in einem festen Gehäuse 50 angeordnet und innerhalb des Gehäuses aussen herum mit einem Gasdruck beaufschlagt. Dieser Gasdruck wird mittels einer automatisch geregelten Steuerung eingestellt, in Abhängigkeit von Druckfluktuationen in der Flüssigkeitsleitung.

Beide vorab genannten Vorrichtungen erscheinen eher ungeeignet im Zusammenhang mit der Kompensation von Druckpulsationen in Hydraulikleitungen, da sie einerseits zu träge sind und anderseits einen relativ komplizierten Aufbau mit sich bringen.

In der DE-25 49 367 wird eine Vorrichtung zur Entlastung einer Rohrleitung für Flüssigkeiten von Druckstössen beschrieben. Die beschriebene Vorrichtung ist nur geeignet für das Ausgleichen von erhöhten Druckstössen und nicht zum Ausgleichen von Unterdruck. Bei Auftreten von Überdruck wird ein Ventil geöffnet, um aus der Rohrleitung Flüssigkeit abzulassen, was insbesondere bei Hydraulikleitungen, z.B. bei Servolenkungsanlagen ungeeignet ist, da damit ein Flüssigkeitsverlust verbunden ist. Zudem öffnet sich dieses Ventil erst bei einem gewissen Überdruck, und die Ventilsteuerung ist wiederum sehr kompliziert aufgebaut mit Speicherbehälter, Drossel, Sperrbehälter, Sperrflüssigkeit usw., was insbesondere im Fahrzeugbereich ungeeignet ist.

In der EP-A-0 633 400 sowie der EP-0 679 832 schliesslich werden adaptive, hydropneumatische Pulsationsdämpfer beschrieben, welche für pulsationsbehaftete Hydrauliksysteme mit stark wechselndem Betriebsdruck vorgeschlagen werden, und welche eine hydraulisch steife Kopplung zwischen einer Druckquelle und einem Verbraucher eines Hydrauliksystems ermöglicht. Dabei wird vorgeschlagen, die Dämpfungsmembran des adaptiven Pulsationsdämpfers an der dem zu dämpfenden Hydraulikmedium entgegengesetzten Oberfläche mit demselben Druck zu beaufschlagen, welcher im Hydraulikmedium selbst vorherrscht.

Dieser Druckausgleich erfolgt über eine Druckausgleichsleitung, welche das Hydrauliksystem mit einem Gasvolumen verbindet, welches an der dem zu dämpfenden Hydraulikmedium entgegengesetzten Oberfläche der Dämpfungsmembran angeordnet ist. Um zu vermeiden, dass dieses Gasvolumen ebenfalls mit den Druckpulsationen im Hydrauliksystem beaufschlagt wird, ist in dieser Ausgleichsleitung eine Drossel angeordnet, so dass ein Druckausgleich über diesen gedrosselten Weg nur zur längerfristigen Adaption des Gasvolumens an den hydraulischen Arbeits- bzw. Betriebsdruck im Hydrauliksystem dient und somit keine Pulsationen übertragen werden. Diese Betiebsdruckadaption über eine gedrosselte Leitung stellt ein zusätzliches Konstruktionselement dar, welches nebst der Verkomplizierung der Konstruktion eine Verteuerung mit sich bringt.

Es ist daher eine Aufgabe der vorliegenden Erfindung, eine Vorrichtung zum Reduzieren von Druckpulsationen und von Druckstössen in Hydrauliksystemen, wie insbesondere Hydraulikleitungen, vorzuschlagen, welche ein relativ kleines Einbauvolumen beansprucht, einfach und kostengünstig in der Herstellung ist, und zudem eine Dämpfung über einen breiten Frequenzbereich gewährleistet. Erfindungsgemäss wird die genannte Aufgabe mittels einer Vorrichtung nach Anspruch 1 gelöst.

Analog den Pulsationsdämpfern, beschrieben in der EP-0 633 400 wie auch in der EP-0 679 832, weist die erfindungsgemässe Vorrichtung ein Ausgleichsvolumen auf, welches vom Hydrauliksystem durchflossen wird, und in welchem Ausgleichsvolumen eine verschiebliche Wandung bzw. eine Membran angeordnet ist, welche Wandung bzw. Membran an der einen Seite mit den Pulsationen des Hydrauliksystems beaufschlagt wird und an der entgegengesetzten Seite einen Gegendruck zum Hydrauliksystem aufweist, welcher wenigstens nahezu dem mittleren Druck im Hyrauliksystem entspricht. Um sicher zu stellen, dass der Gegendruck immer in etwa dem Druck im Hydrauliksystem entspricht, wird in beiden Druckschriften vorgeschlagen, das Hydrauliksystem über eine Ausgleichsleitung mit der Gegenseite zu verbinden, wobei in dieser Leitung eine Drossel vorgesehen ist, um das Uebertragen von Pulsationen auf die Gegenseite der Wandung bzw. Membran zu verhindern. Somit werden über diese Ausgleichsleitung Druckschwankungen nur über einen längeren Zeitabschnitt ausgeglichen, d.h. es werden nur extrem niederfrequente Pulsationen durch die Drossel übertragen. Im Gegensatz dazu wird nun erfindungsgemäss vorgeschlagen, die Ausgleichsleitung mit dem Volumen an der Gegenseite der Wandung bzw. Membran mit dem Hydrauliksystem bzw. der Hydraulikleitung in Fortpflanzungsrichtung der Pulsationen nachgeschaltet zum Ausgleichsvolumen zu verbinden, so dass über diese Ausgleichsleitung keine Pulsationen mehr an die Gegenseite der Wandung bzw. Membran übertragen werden können und somit die Notwendigkeit des Anordnens einer Drossel entfällt. Dies bringt eine wesentliche Vereinfachung der Konstruktion eines Pulsationsdämpfers im Vergleich zu den Vorschlägen in den beiden genannten Europäischen Druckschriften.

Die Anordnung der Ausgleichsleitung, nachgeschaltet zum Ausgleichsvolumen, führt zu einem weiteren Dämpfungseffekt, der sich wie folgt erklärt: Druckpulsationen werden an Drosselstellen bzw. an geschlossenen Enden in Hydrauliksystemen reflektiert und wandern entgegen der Durchflussrichtung zur Pulsationsquelle zurück. Zwischen dem beschriebenen Pulsationsdämpfer und dem Verbraucher bilden sich deshalb infolge von Restpulsationen stehende Wellen aus, da der Verbraucher immer eine Drosselstelle bzw. ein geschlossenes Ende darstellt. Diese Restpulsationen werden mit Hilfe der direkten Ankoppelung der Ausgleichsleitung an die Hydraulikleitung zwischen Pulsationsdämpfer und Verbraucher abgebaut. Dies geschieht über die Weiterleitung der Pulsation durch die Ausgleichsleitung bis hin zu einer weichen Feder bzw. einem Dampf- oder Gaspolster, welche die Druckspitzen dämpft und somit zu einer zusätzlichen Dämpfungswirkung führt. Dies stellt ein weiteres wichtiges Unterscheidungsmerkmal der Vorrichtung gegenüber den beiden genannten Druckschriften dar, da dort aufgrund der Drossel in der Ausgleichsleitung eine direkte Weiterleitung von Pulsationen bis hin zur Feder bzw. dem Dampf- oder Gaspolster ausgeschlossen ist.

Die genannte Feder bzw. das Dampf- oder Gaspolster ist bei der erfindungsgemässen Vorrichtung im Bereich nahe oder an der Gegenseite der Membran bzw. verschieblichen Wandung angeordnet, um die durch die Wandung bzw. Membran aufgenommenen Pulsationen zu dämpfen. Gemäss einer Ausführungsvariante ist diese weiche Feder bzw. das Gas- oder Dampfpolster unmittelbar an derjenigen Oberfläche der Membran bzw. Wandung angeordnet, welche der mit den Pulsationen beaufschlagten Seite entgegen gesetzt ist.

Weitere bevorzugte Ausführungsvarianten einer erfindungsgemässen Vorrichtung für die Pulsationsdämpfung sind in den abhängigen Ansprüchen charakterisiert.

Analog der in der EP-0 633 400 wie auch der EP-0 679 832 beschriebenen Pulsationsdämpfern kann es sich bei der erfindungsgemässen Vorrichtung um einen passiven adaptiven Pulsationsdämpfer handeln, oder aber um einen aktiven adaptiven Pulsationsdämpfer, welcher geignet ist, um beispielsweise durch eine Pumpe in einem Hydrauliksystem erzeugte Druckpulsationen zu dämpfen.

Die Erfindung wird nun beispielsweise und unter Bezug auf die beigefügten Figuren näher erläutert.

Dabei zeigt:
- Fig. 1: schematisch dargestellt eine Ausführungsvariante einer erfindungsgemässen Vorrichtung zur passiven Pulsationsdämpfung,
- Fig. 2: im Schnitt eine weitere Ausführungsvariante eines erfindungsgemäss ausgebildeten Pulsationsdämpfers und
- Fig. 3: eine Graphik, in der die Amplitudendichtespektren der wechselnden Druckanteile einer bekannten und der erfindungsgemässen Vorrichtung zur passiven Pulsationsdämpfung dargestellt sind.

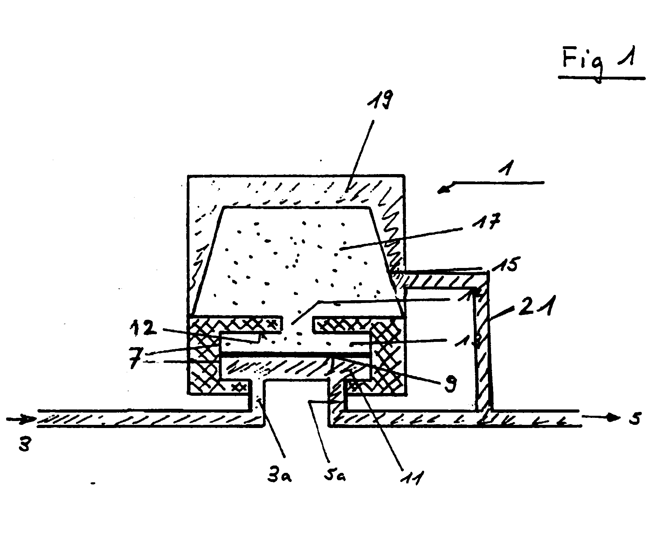

In Fig. 1 ist vereinfacht schematisch und im Querschnitt ein erfindungsgemässer passiver Pulsationsdämpfer dargestellt, beispielsweise geeignet für den Einbau in ein Hydraulikleitungssystem einer Servolenkung von einem Kraftfahrzeug. Der erfindungsgemässe Pulsationsdämpfer ist gemäss Fig. 1 dabei derart in eine Hydraulikleitung bzw. zwischen einem Zufluss 3 und einem Abfluss 5 oder im Abzweig einer Hydraulikleitung angeschlossen, dass die Leitung über Anschlussleitungen 3a bzw. 5a mit dem Pulsationsdämpfer verbunden ist. Diese Anschlussleitungen 3a bzw. 5a münden in eine Ausgleichskammer 7, welche mittig durch eine Membran 9, wie beispielsweise eine Metallmembran, ein Elastomer oder eine verschiebliche Wandung, in ein Hydraulikausgleichsvolumen 13 getrennt wird.

Über Öffnungen 14 ist das Druckausgleichsvolumen 13 mit einem Gasvolumen 17 innerhalb einer Speichermembran 15 verbunden. Gasvolumen 17 und Speichermembran 15 bilden eine sogenannte Gasfeder. Selbstverständlich ist es möglich, anstelle dieser Gasfeder auch eine mechanische Feder oder andere Federelemente zu verwenden.

Die Speichermembran 15 ist aussen beaufschlagt durch ein Druckausgleichs- bzw. Entlastungsvolumen 19, welches über eine Druckausgleichsleitung 21 mit der Abflussleitung 5 verbunden ist. Dadurch wird sichergestellt, dass im Oelvolumen 19 weitgehendst derselbe mittlere Druck vorliegt wie in den Leitungen 3 und 5 oder dem Ausgleichsvolumen 11.

Durch diese Auslegung des Pulsationsdämpfers ergibt sich eine sogenannte adaptive bzw. selbsteinstellende Entlastung, wodurch der Wechselanteil des Druckes im mit Medium gefüllten Entlastungsvolumen 19 durch das Gasvolumen 17 eliminiert oder gemindert wird und nur der statische Anteil des Druckes auf der Seite der Membran bzw. verschieblichen Wandung wirkt, die dem Gasvolumen 13 zugewandt ist. Erhöht sich beispielsweise der statische Druck im Hydrauliksystem, so wirkt diese Druckerhöhung auf beiden Seiten der Membran bzw. verschieblichen Wandung gleichermassen. In der Ausgleichskammer 11 geschieht dies durch die direkte Verbindung zum Hydrauliksystem, und im Entlastungsvolumen 19 geschieht dies durch die Komprimierung des Gasvolumens 17, welches über die Ausgleichsleitung 21 mit dem Hydrauliksystem verbunden ist. Somit wird die Membran 9 vom statischen Anteil des Druckes entlastet.

Der grosse Vorteil der in Fig. 1 dargestellten Vorrichtung zur Pulsationsdämpfung liegt darin, dass in der Ausgleichsleitung 21 keine Drossel anzuordnen ist, wie dies in den Ausführungsvarianten gemäss EP-0 633 400 und EP-0 679 832 notwendig ist, in welchen beiden Druckschriften die Ausgleichsleitung dem Pulsationsdämpfer vorgeschaltet in das Hydrauliksystem mündet. Würde in den Pulsationsdämpfern, beschrieben in den beiden genannten europäischen Druckschritten, die Drossel weggelassen, so würden Pulsationen aus der Hydraulikleitung auf die Rückseite der Membran bzw. verschieblichen Wandung direkt oder über das Gas- bzw. Dampfpolster geführt, womit gegebenenfalls Pulsationen noch verstärkt werden könnten. Weiterhin ist die in Fig. 1 dargestellte Vorrichtung im Gegensatz zu den beiden genannten Druckschriften in der Lage, Restpulsationen, die sich in Form von stehenden Wellen zwischen dem Pulsationsdämpfer und dem nachgeschalteten Verbraucher ausbilden, zu dämpfen, derart, dass die Restpulsationen über die drosselfreie Ausgleichsleitung 21 an der Gasfeder gemindert werden können.

Die Notwendigkeit dieser Drossel in der Ausgleichsleitung zur Rückführung des statischen Druckes entfällt nun in der erfindungsgemäss vorgeschlagenen Vorrichtung, was einen wesentlichen konstruktiven Vorteil mit sich bringt. Trotzdem aber ist der Ausgleich von statischen Druckänderungen gegeben, und da die Pulsationen vor der Abzweigung der Ausgleichsleitung im Hydrauliksystem geglättet werden, können diese auch nicht auf die Rückseite der Membran bzw. verschieblichen Wandung geführt werden. Dies bekanntlich deshalb, da die Funktionsweise dieses Pulsationsdämpfers 1 darin besteht, dass eine in der Zufuhrleitung 3 sich fortpflanzende Pulsation über den Zuleitungsabschnitt 3a in das Ausgleichsvolumen 11 gelangt. Durch die Pulsation wird die verschiebliche Wandung oder Membran 9, wie beispielsweise eine Metallmembran oder Elastomer-Membran, gegen das darüberliegende Gasvolumen 13 ausgelenkt, wodurch der Puls weitgehendst absorbiert wird. Somit verlässt das Hydraulikmedium bzw. das Hydrauliköl das Ausgleichsvolumen über das Verbindungsstück 5a zur Abflussleitung 5 weitgehendst pulsationsfrei, so dass auch das Hydraulikmedium in der Ausgleichsleitung 21 weitgehendst pulsationsfrei ist. Es wirken lediglich Restpulsationen, die von geringerer Grössenordnung sind und die sich in Form von stehenden Wellen zwischen Pulsationsdämpfer und Verbraucher ausbilden. Diese werden jedoch über die drosselfreie Ausgleichsleitung mit dem Gasvolumen verbunden und dort absorbiert.

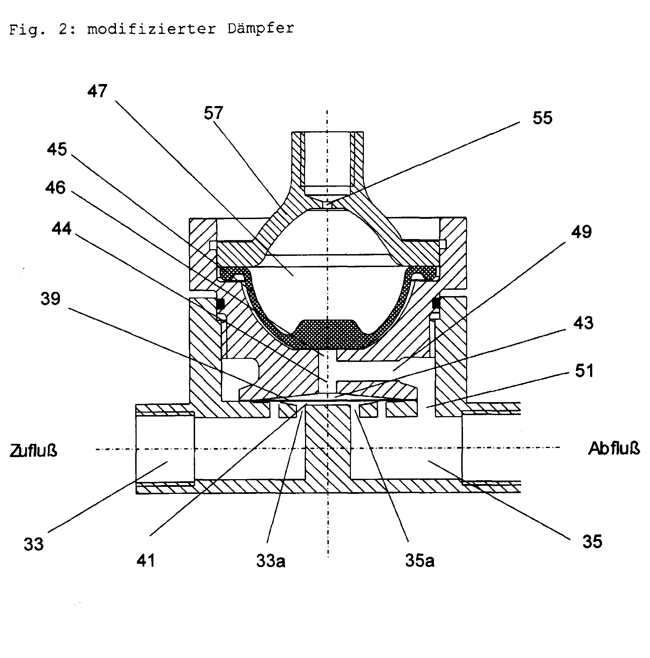

In Fig. 2 ist im Schnitt eine weitere Ausführungsvariante eines erfindungsgemässen Pulsationsdämpfers dargestellt, wobei im Unterschied zu Fig. 1 die dämpfende Gasfeder nicht unmittelbar an der Rückseite der Membran bzw. verschieblichen Wandung angeordnet ist. Der in Fig. 2 dargestellte Pulsationsdämpfer weist wiederum eine Zuflussleitung 33 auf, welche über Anschlussleitungen 33a mit einem Hydraulikausgleichsvolumen 41 verbunden ist, in welchem die verschiebliche Wandung bzw. Membran 39 angeordnet ist. Ueber Anschlussleitungen 35a verlässt das weitgehendst pulsationsfreie Hydraulikmedium das Ausgleichsvolumen 41 und gelangt in die Abflussleitung 35. Das dem Hydraulikausgleichsvolumen 41 gegenüberliegende Druckausgleichsvolumen 43 wird nun nicht durch ein Gas- bzw. Dampfpolster gebildet, sondern in diesem Volumen findet sich ebenfalls Hydraulikmedium. Über eine Öffnung 44 ist dieses Druckausgleichsvolumen 43 mit einem Oelvolumen 49 verbunden, welches über eine Druckausgleichsleitung 51 mit der Abflussleitung 35 im Hydrauliksystem kommuniziert.

Für die eigentliche Aufnahme der Druckpulsationen ist eine gummielastische Speichermembran 45 angeordnet, welche ein Gasvolumen 47 umfasst. Gasvolumen 47 und Speichermembran 45 bilden wiederum die sogenannte Gasfeder.

Das Funktionsprinzip ist ähnlich demjenigen in Fig. 1, indem über die Zuflussleitung 33 das Hydraulikmedium in das Hydraulikausgleichsvolumen 41 weitgehendst senkrecht auf die Membran 39 gelangt, welche eine sog. Schwingmembran sein kann. Über den Auslass 35a verlässt das Hydraulikmedium das Hydraulikausgleichsvolumen 41 und gelangt in die Abflussleitung 35. Das Hydraulikausgleichsvolumen 41 wird also vom kompletten Volumenstrom durchflossen, wodurch die axial eingespannte Schwingmembran 39 Volumen bzw. Druckpulsationen ausgleichen kann, indem sie das freigegebene Volumen auf ihrer Gegenseite verdrängt und dies direkt auf die Gasfeder mit dem leichter komprimierbaren Medium innerhalb des Gasvolumens 47 überträgt. Wesentlich ist hierbei die direkte Koppelung des Ausgleichsvolumens 43 mit der Gasfeder über eine gerade und kurz auszuführende Leitung. Die Membran 39 wird durch den Druckpuls ausgelenkt und erzeugt einen Volumenstrompuls, welcher durch die Öffnung 44 nach oben in Richtung der Öffnung 46 und des Ölvolumens 49 strömt. Der Volumenstrompuls pflanzt sich nicht im Ölvolumen 49 fort, sondern er wird von der weichen Gasfeder aufgenommen. Die Aufnahme des Volumens durch die Gasfeder verhindert, dass das Hydraulikmedium komprimiert wird und ein neuer Druckpuls entsteht, der sich über die Ausgleichsleitung 51 und die Abflussleitung 35 im nachgeschalteten System ausbreitet.

Der Gasspeicher 47 kann über eine Bohrung 55 befüllt, d.h. auf einen bestimmten Druck vorgespannt und mittels des Deckels 57 abgedichtet werden. Der Druckausgleich, der nötig ist, um die Schwingmembran 39 bei jedem statischen Systemdruck in der entlasteten Mittellage zu halten, wird über die Ausgleichsleitung 51 realisiert. Ueber die Parameter Gasvolumen, Gasvorspanndruck, Schwingmembrandicke und Einbaustelle des Pulsationsdämpfers in einem Hydraulikkreislauf kann nun auf die jeweiligen Anforderungen im Hydrauliksystem bezüglich der Pulsationsdämpfung eingegangen werden.

Wie insbesondere aus Fig. 2 deutlich ersichtlich, ergibt sich durch das Weglassen der aus dem Stand der Technik bekannten Drossel eine wesentliche Vereinfachung der Pulsationsdämpfungsvorrichtung.

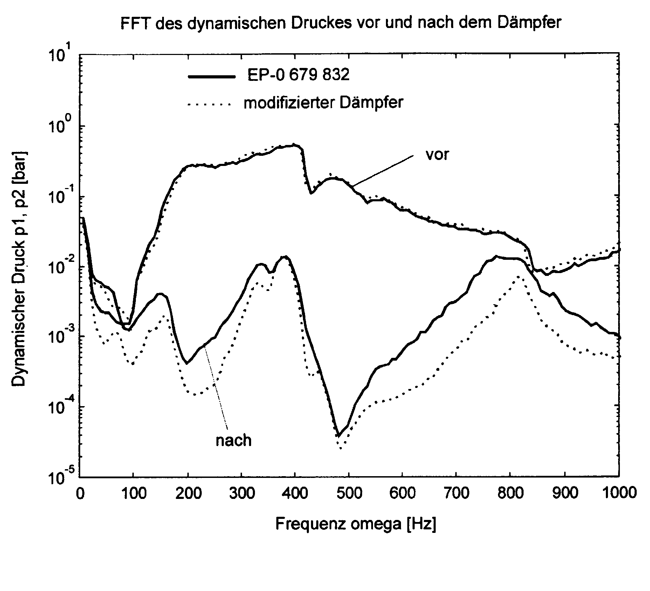

In einer Graphik gemäss Fig. 3 sind die Amplitudendichtespektren des wechselnden Druckanteils einer bekannten und der erfindungsgemässen Vorrichtung zur passiven Pulsationsdämpfung dargestellt, und zwar jeweils vor und nach dem Pulsationsdämpfer. Beim bekannten Pulsationsdämpfer handelt es sich um denjenigen gemäss der in der EP-0 679 832 offenbarten Lehre, wobei die entsprechenden Amplitudendichtespektren mittels durchgehender Linien dargestellt ist. Zum Vergleich sind die Amplitudendichtespektren des erfindungsgemässen Pulsationsdämpfers in der selben Graphik mit punktierter Linie dargestellt.

Aus dem Vergleich der Spektren des bekannten und des erfindungsgemässen Pulsationsdämpfers wird deutlich, dass der erfindungsgemässe Pulsationsdämpfer bessere Dämpfungseigenschaften aufweist als der bekannte. Damit hebt sich der erfindungsgemässe Pulsationsdämpfer nicht nur durch die erwähnte wesentlich einfachere Konstruktion vom Stand der Technik ab, sondern darüber hinaus auch noch durch verbesserte Dämpfungseigenschaften.

Selbstverständlich ist es möglich, die in den Fig. 1 und 2 dargestellten erfindungsgemässen Pulsationsdämpfungsvorrichtungen zu modifizieren bzw. durch weitere Elemente zu ergänzen, wobei hierzu auf die beiden Druckschriften EP-0 633 400 und EP-0 679 832 verwiesen wird. Mit anderen Worten ist es möglich, weitere Federanordnungen vorzusehen, wie beispielsweise Tellerfedern im Bereich der Membran bzw. flexiblen Wandung, oder aber es ist möglich, durch zusätzliche aktive Pulsationsdämpfung auf spezifische Anforderungen bei der Pulsationsdämpfung einzugehen. Auch bei der Materialwahl der Membran bzw. verschieblichen Wandung sei auf die genannten Druckschriften verwiesen, indem sowohl Metallmembran, Elastomer-Membran, federgelagerte steife Wandungen etc. verwendet werden können.

Wiederum kann es wesentlich sein, dass im Bereich der Membran eine Anschlagfläche vorgesehen ist, um die Auslenkung der Membran bzw. verschieblichen Wandung zu begrenzen, um bei auftretenden starken Pulsationen eine Instabilität des Hydrauliksystems zu verhindern.

Auch die Ausgestaltung des Gaspolsters bzw. der Gasfeder kann verschiedenartig sein, indem eine balgartige Speichermembran 45 vorgesehen werden kann. Schlussendlich ist es auch möglich anstelle des Gaspolsters bzw. der Gasfeder mechanische Federelemente vorzusehen, welche direkt an der Membran bzw. verschieblichen Wandung angreifen, um bei deren Auslenkung infolge Pulsationen dämpfend auf diese zu wirken.

## Patentansprüche

1. Vorrichtung zum Reduzieren von in einem Hydrauliksystem insbesondere durch eine Pumpe verursachte Druckpulsationen, aufweisend ein Ausgleichsvolumen (11, 41) mit einer im Volumen angeordneten und das Volumen abschliessenden verschieblichen Wandung bzw. Membran (9, 39), welche auf einer Seite mit den Pulsationen beaufschlagt ist und an der entgegengesetzten Seite mit einem Gegendruck beaufschlagt ist, welcher wenigstens nahezu dem mittleren Druck im Hydrauliksystem entspricht, dadurch gekennzeichnet, dass das an der entgegengesetzten Seite der Wandung angeordnete Druckausgleichsvolumen (13, 43) über eine Ausgleichsleitung (21, 51) mit dem Hydrauliksystem verbunden ist, welche Leitung (21, 51) in Fortpflanzungsrichtung der Pulsationen in Bezug auf das Ausgleichsvolumen (11, 41) nachgeschaltet in das Hydrauliksystem mündet.

2. Vorrichtung, insbesondere nach Anspruch 1, dadurch gekennzeichnet, dass die entgegengesetzte Seite der Wandung bzw. Membran (9, 39) mit einer Federanordnung, wie beispielsweise einer sog. weichen Feder (15, 17; 45, 47), wirkverbunden ist, welche zunehmend gegen die Membran bzw. Wandung (9, 39) wirkt, wenn diese infolge einer auftretenden Pulsation ausgleichsvolumenvergrössernd verschoben bzw. ausgelenkt wird.

3. Vorrichtung, insbesondere nach Anspruch 2, dadurch gekennzeichnet, dass die Federanordnung eine Gasfeder bzw. ein Gas- oder Dampfpolster ist, aufweisend eine Speichermembran (15, 45) sowie ein Gas- oder Dampfvolumen (17, 47).

4. Vorrichtung, insbesondere nach einem der Ansprüche 1 - 3, dadurch gekennzeichnet, dass die Membran bzw. verschiebliche Wandung (9, 39) auf einer Seite vom Gas- bzw. Dampfvolumen (17) beaufschlagt ist.

5. Vorrichtung, insbesondere nach einem der Ansprüche 1 - 4, dadurch gekennzeichnet, dass das Gasvolumen (17, 47) beabstandet von der Membran bzw. verschieblichen Wandung angeordnet ist.

6. Vorrichtung, insbesondere nach einem der Ansprüche 1 - 5, dadurch gekennzeichnet, dass die Membran bzw. verschiebliche Wandung (9, 39) eine Metallmembran ist, aus einem Elastomer gefertigt ist oder von einem federgelagerten plattenartigen Organ gebildet ist.

7. Vorrichtung, insbesondere nach einem der Ansprüche 1 - 6, dadurch gekennzeichnet, dass die verschiebliche Wandung bzw. Membran (9, 39) durch zusätzliche Federanordnungen wie beispielsweise Tellerfedern abgefedert ist.

8. Vorrichtung, insbesondere nach einem der Ansprüche 1 - 7, dadurch gekennzeichnet, dass das Ausgleichsvolumen (11, 41) in einer Abzweigung (3a, 33a, 5a, 35a) zu einer Hydraulikleitung (3, 5; 33, 35) angeordnet ist und vom Hydraulikmedium durchflossen wird.

9. Vorrichtung, insbesondere nach einem der Ansprüche 1 - 8, dadurch gekennzeichnet, dass weiter Mittel zur aktiven Pulsationsdämpfung vorgesehen sind bzw. Mittel zur aktiven Betätigung der verschieblichen Wandung bzw. Membran (9, 39) vorgesehen sind, um einen dem Puls in der Leitung entgegengesetzten zweiten Puls zu erzeugen, wodurch sich die beiden Pulse wenigstens nahezu aufheben, oder einen Unterdruck zu erzeugen, um den einen Pulsstoss zu eliminieren.

10. Vorrichtung, insbesondere nach einem der Ansprüche 1 - 9, dadurch gekennzeichnet, dass die Eingangsleitung(en) und Ausgangsleitung(en) (3a, 5a; 33a, 35a) zum bzw. vom Ausgleichsvolumen (11, 41) im wesentlichen senkrecht zur Membranebene bzw. der Ebene der verschieblichen Wandung angeordnet sind, damit das in das Ausgleichsvolumen einströmende Hydraulikmedium im wesentlichen senkrecht auf die Membran bzw. verschiebliche Wandung auftrifft.

11. Servolenkungsanlage eines Kraftfahrzeuges mit einer Vorrichtung nach einem der Ansprüche 1 - 10.
